# EUROPEAN PATENT APPLICATION

(11) **EP 1 947 571 A1**
(43) Date of publication of application: **23.07.2008**
(21) Application number: 06811895.9
(22) Date of filing: 17.10.2006
(51) Int. Cl.: G06F 13/00, G06F 15/00

(54) **INFORMATION PROCESSING APPARATUS**

(30) Priority: 19.10.2005 JP 2005304290
(71) Applicant: Sharp Kabushiki Kaisha, Osaka-shi, Osaka 545-8522 (JP)
(72) Inventor: YAMADA, Takanori, Chiba-shi, Chiba 266-0011 (JP)
(74) Representative: Müller - Hoffmann & Partner
(86) International application number: PCT/JP2006/320640
(87) International publication number: WO 2007/046369

(57) **Abstract**

Each of presence servers 13 and 14 is capable of holding presence information on devices connected thereto, and transmits the held presence data to any one of the devices connected thereto, in response to a presence reference request from the device. A media conversion server 15 has a function to convert provided image data or audio data into a designated format, and is capable of receiving both requests from the presence servers and requests from portable terminals. A data server 16 is a server which stores image data and audio data, and is accessible by the portable terminals 11 and 12, the personal computer 17 and the like. Such devices able to access the data server 16 can store any data into a data storage 161 in the data server. Not only the devices or users having registered the data but also other devices or users can refer to the data stored in the data storage 161.

## Description

### TECHNICAL FIELD

The present invention relates to an information processing technique using presence information, and particularly to a technique using, as a piece of presence information, image data and audio data in an information processing apparatus having a communication function.

### BACKGROUND ART

Recently, various techniques using presence information on the basis of SIPs (including RFC3261) have been developed and many services using the presence information have been provided. A typical existing application example is a function of instant messengers typified by MSN Messenger and the like to inform a registered user of the status (present, absent, busy, on the phone or the like) of a potential communication partner. This function enables a user to know, in advance, current availability of a potential communication partner to whom the user intends to send a message. Moreover, now being developed is a technique in which presence information is used in portable phones to improve business efficiency by allowing users to check the status of a potential communication partner before calling, as well as to manage position information.

As described above, presence services have come to play a significant role as an entrance in communication based on the SIP, and increasingly more services will be provided depending on kinds of data handled as presence information.

Organizations such as IETF are working to standardize the SIPs and presence based on the SIPs, and various extended applications thereof are also provided even now. For example, in Patent Document 1, proposed is a technique enabling more detailed data exchange in which attribute information and additionally its supplemental qualifier are registered as presence information.

Moreover, instead of limiting a target for presence information management to users, extending the target to devices and locations makes it possible to develop more services. Examples of possible targets include presence of an air conditioner (on/off of the power, preset temperature, room temperature and the like) and presence of a room (room temperature, opening/closing condition of doors, the number of people in the room, and the like).

As can be readily imagined, evolution of a ubiquitous computing technique will establish a large network to which connected are not only so-called computers such as personal computers, but also devices, such as home electric appliances, that have been designed so far without the concept of the communication implementation. When such a large network is established, use of presence techniques will be effective for allowing users to check conditions of a device and an environment from a distant place at any time. For example, from a place away from home, the users can check whether or not doors are locked up and whether or not an air conditioner is on, as well as room temperature.
Patent Document 1: Japanese Patent Translation Publication No. 2004-532478

### DISCLOSURE OF THE INVENTION

### Problem to be Solved by the Invention

In the aforementioned Patent Document 1, provided is a means for registering, as pieces of presence information, image data, audio data and the like, as well as presence data provided as text information such as "present" and "absent." However, if the day comes when various devices share presence information, usable data formats will be likely to differ between the devices. Accordingly, some devices may possibly be unable to use some data.

The present invention aims to provide a technique for converting image data, audio data or the like included in presence information into a format usable in a device that is to receive the data, if the original format of the data is not usable in the device.

### Means for Solving the Problem

The present invention aims to convert image data, audio data or the like into a format usable in a device to receive presence information if the original format of the data is not usable in the device. The image data or audio data to be converted is either registered in a presence server, or received by the device directly from other communicating devices without involving the presence server.

When presence information including image data and/or audio data is exchanged between two devices that are both capable of using the presence information and that are incompatible in terms of usable formats of image data and audio data, one of the devices to transmit the presence information is informed of the formats of image data and audio data usable in the other one of the devices to receive the presence information. When the presence information to be transmitted includes image data or audio data of a format unusable in the receiving device, the device to transmit the presence information converts the data into a format usable in the receiving device, and thereafter transmits the resultant data to the receiving device.

In a case where a presence server is used in such an exchange of the presence information between the devices, information on formats of image data and audio data usable in a receiving device is previously registered in the presence server, as pieces of the presence information on the device. Upon receipt of a request for presence information, the presence server checks whether or not the requested presence information includes data of a format unusable in a device having sent the request. If the requested presence information includes such a data, the presence server converts the data into a format usable in the device, and thereafter transmits the resultant data to the device.

### Effects of the Invention

According to the present invention, even in the case where devices and software to exchange presence information between each other are incompatible in terms of usable data formats of image data, audio data and the like, the devices and the software can exchange the presence information between each other. Accordingly, the present invention facilitates a flexible exchange of presence information between a device supporting various formats, such as a computer, and a device supporting less various formats, such as a portable terminal, thereby promoting diversification of services using presence information.

### BRIEF DESCRIPTION OF THE DRAWINGS

[Fig. 1] Fig. 1 is a functional block diagram showing a configuration example of a system for displaying and reproducing presence information according to a first embodiment of the present invention.
[Fig. 2] Fig. 2 is a diagram showing a data configuration example of presence information.
[Fig. 3] Fig. 3 is a flowchart showing a processing flow for receiving presence information by use of the system for displaying and reproducing presence information.
[Fig. 4] Fig. 4 is a functional block diagram showing a configuration example of a system for displaying and reproducing presence information according to a second embodiment of the present invention.

### Description of Symbols

- 11: portable terminal
- 12: portable terminal
- 13: presence server
- 131: presence database
- 14: presence server
- 141: presence database
- 15: media conversion server
- 16: data server
- 161: data storage
- 17: personal computer (PC)
- 18: home electric appliance (air conditioner, for example)
- 21: presence data
- 211: capacity data
- 212: image data
- 211: audio data

### BEST MODES FOR CARRYING OUT THE INVENTION

In the present specification, presence information is defined as information indicating: conditions of a device such as what kind of data the device has and which status the device is in; a capacity of the device such as what types of processing the device can perform; a status of a person using the device or software; and the like. The data form for describing the information is not particularly limited. This means that information indicating "hot," for example, may be described as text data of "hot," as audio data producing a voice saying "hot," or as image data of a face looking "hot."

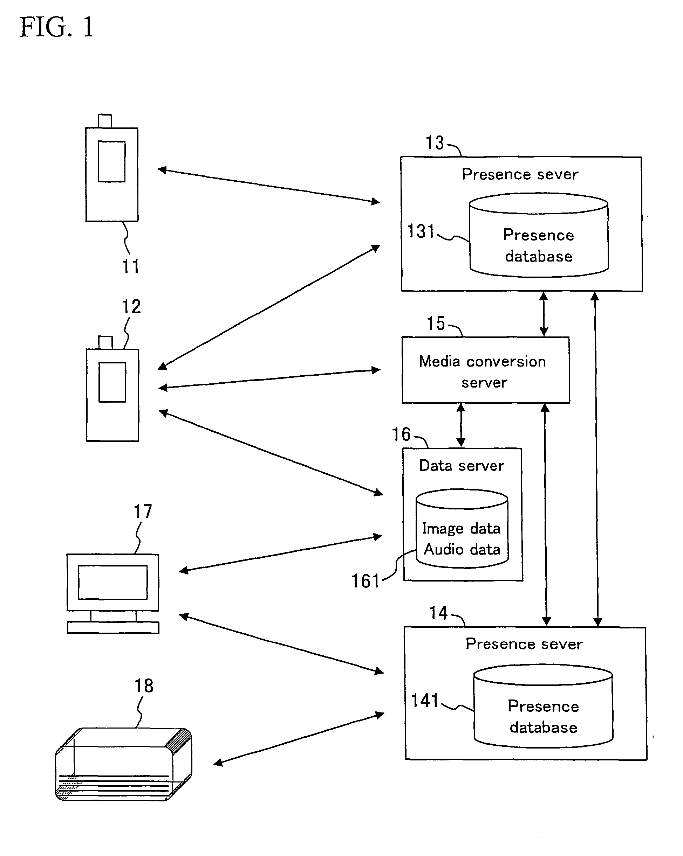

Hereinafter, description will be given of an information processing technique according to an embodiment of the present invention with reference to drawings. Fig. 1 is a functional block diagram showing a system configuration example of an information processing system which includes an information processing apparatus using presence information according to the present embodiment. As shown in Fig. 1, the information processing system according to the present embodiment has presence servers 13 and 14, a media conversion server 15, a data server 16, portable terminals 11 and 12, a personal computer 17, a home electric appliance (for example, air conditioner) 18. Each of these devices has a certain communication function.

Each of the portable terminals 11 and 12 is a device, such as a portable phone, a laptop PC or the like, that has a function to access the presence server 13 so as to register or refer to presence information therein and a function to access the media conversion server and the data server.

Each of the presence servers 13 and 14 is capable of holding presence information on devices connected thereto, and has a function to transmit the held presence data to any one of the devices connected thereto, in response to a presence reference request from the device. Here, it is assumed that the presence server 13 is connected to the portable terminals 11 and 12, and that the presence server 14 is connected to the personal computer 17 and the home electric appliance 18.

The media conversion server 15 has a function to convert provided image data or audio data into a designated format, and is designed to be capable of receiving both requests from the presence servers and requests from the portable terminals.

The data server 16 is a server that stores image data and audio data, and is accessible from the portable terminals 11 and 12, the personal computer 17 and the like. The data server 16 is configured so that any devices able to access the data server 16 can store any data into a data storage 161 in the data server, and that the data stored in the data storage 161 can be accessed by devices or users other than the devices or users having registered the data. The data server 16 is implemented as an HTTP server or a FTP server, for example.

The information processing apparatus (personal computer) 17 is a computer on which software using presence information, such as an instant message or the like, is running. The home electric appliance 18 can use presence information, and is described by using an air conditioner as an example in the present embodiment.

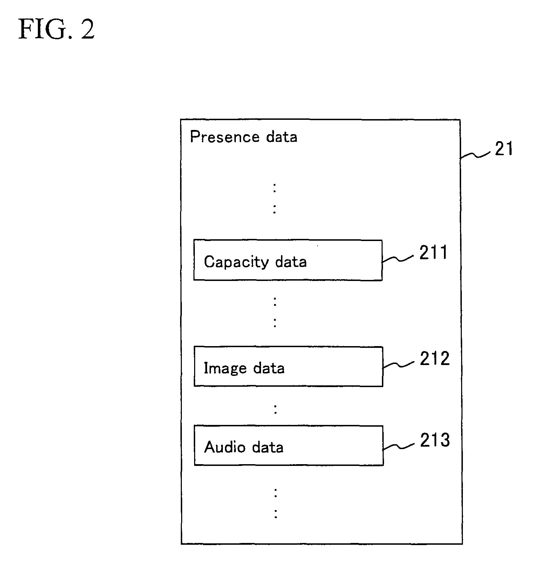

Fig. 2 is a diagram showing a configuration example of presence data according to the present embodiment. As shown in Fig. 2, presence data 21 can include, as capacity data 211 of a device, information on formats of image data and audio data formats usable by the device. For example, the capacity data 211 includes codec types (GIF, JPEG, PNG and the like) and image sizes (60×60, 160×120, VGA and the like) for the capacity on still images, while including file formats (AVI, MP4, RealMedia and the like), codec types (mpeg4, DivX and the like), bit rates, frame rates, and image sizes for the capacity on moving images. However, which of those capacities to be registered can be freely determined.

The presence data 21 can also include image data 212 and audio data 213. The image data 212 may be either a still image or a moving image. Moreover, the image data 212 and the audio data 213 may be either different pieces of data or a single piece of moving image data (for example, AVI, RealMedia, MP4 or the like). In addition, the image data 212 and the audio data 213 to be intended to be displayed as presence information may be in a server outside of the presence server and may be in the data server 16 in the present embodiment. In this case, the presence data includes storage location information on the image data 212 (For example, "http://aaa.bb.com/ccc/presence.avi," or the like, when the data server 16 is an HTTP server).

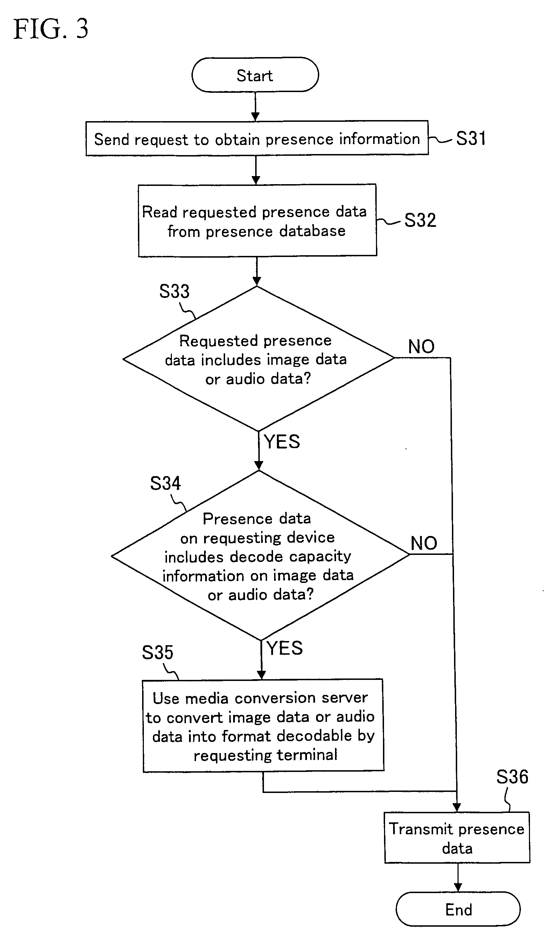

Fig. 3 is a flowchart showing a processing flow for obtaining presence information by use of the display and reproduction technique of presence information, according to the present invention.

Here, it is assumed that the portable terminals 11 and 12 are registered in the presence server 13, and presence information on the personal computer 17 and the air conditioner 18 is registered in the presence server 14, at the time of the start of processing. Moreover, it is assumed that the data server 16 holds the image data registered by the personal computer 17.

In step S31, the device that intends to obtain presence information sends the presence server storing the presence information a request to obtain the presence information. Thereafter, in step S32, the presence server that receives the request to obtain the presence information reads both of the requested presence data and presence information of a user having made the request. Then, in step S33, the presence server checks whether or not the requested presence information includes at least one of image data and audio data. If the requested presence information does not include such data, the processing proceeds to step S36. If the requested presence information does, the processing in step S34 is performed.

In step S34, the presence server determines whether or not the presence information on the device having sent the request includes capacity data indicating a usable format of at least one of image data and audio data. When the requested presence information includes image data, the capacity data on image data is necessary. When the requested presence information includes audio data, the capacity data on audio data is necessary. When the requested presence information includes both image data and audio data, the capacity data on at least one of image data and audio data is necessary. If any one of these conditions is met, then the processing in step S35 is performed. If none of these conditions is met, in other words, if the requested presence information includes neither image data nor audio data, the processing proceeds to step S36.

In step S35, the media conversion server converts, into a format usable in the device having sent the request, data of a format that is not usable in the device among the image data and/or the audio data included in the requested presence information. In addition, the media conversion server replaces, with the data after the conversion, the data of the unusable format included in the requested presence information read in step S32.

In step S36, the requested presence information is transmitted to the device having sent the request, and thereby a series of processing for obtaining the presence information ends.

Hereinafter, description will be given of the processing shown in Fig. 3 with a concrete example. In the presence system in which the devices are connected as shown in Fig. 1, the portable terminal 11 intends to obtain the presence information on the portable terminal 12. Firstly, the portable terminal 11 sends the presence server 13 a request to obtain the presence information on the portable terminal 12. The presence server 13 reads the presence information on the portable terminals 11 and 12. Here, assume that the requested presence information on the portable terminal 12 includes image data of a format that is not usable in the portable terminal 11. In this case, the presence server 13 transmits, to the media conversion server, the image data and the information on a format usable in the portable terminal 11 to make a conversion on the received image data. Thereafter, the resultant presence information on the portable terminal 12 is transmitted to the portable terminal 11.

As described above, in the display and reproduction system according to the present embodiment, even in the case where devices and software to exchange the presence information between each other are incompatible in terms of supported formats of data such as image data and audio data, the devices and the software can exchange the presence information between each other. Accordingly, the system facilitates a flexible exchange of presence information between a device supporting various data formats, such as a personal computer, and a device supporting less various data formats, such as a portable terminal, thereby promoting diversification of services using presence information.

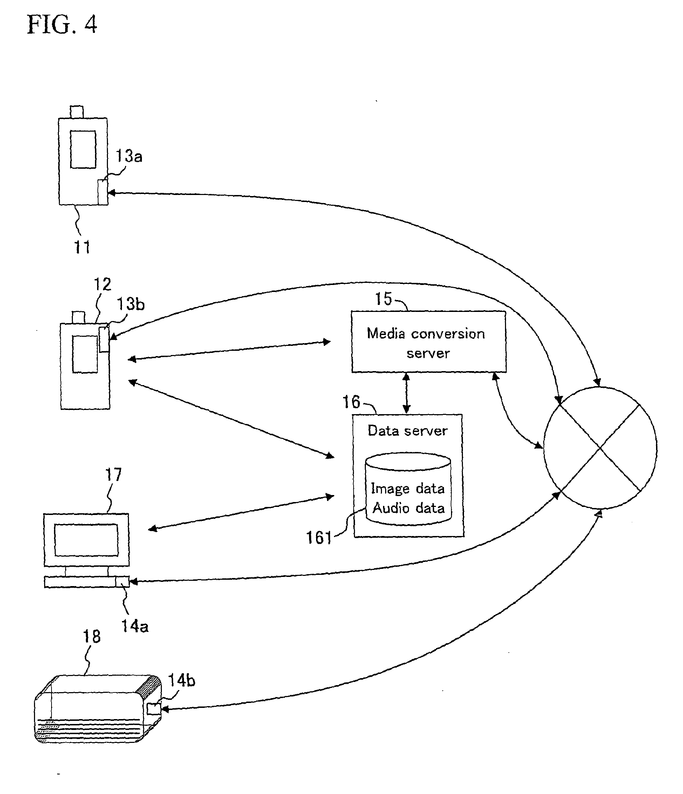

Hereinafter, description will be given of a system for displaying and reproducing presence information, according to a second embodiment of the present invention. Fig. 4 is a functional block diagram showing a configuration example of the system for displaying and reproducing presence information according to the present embodiment. The configuration shown in Fig. 4 is different from the configuration shown in Fig. 1 in that the system has the configuration in which the presence information is directly exchanged between devices 11, 12, 17 and 18 through a network in Fig. 4 while the presence information is exchanged via the presence servers in the embodiment shown in Fig. 1. In the case shown in Fig. 4, a method can be employed in which the devices obtain the presence information (the devices store presence information in their respective memories 13a, 13b, 14a and 14b), and in which an unusable piece of the data thus stored is converted by using a media conversion server 15.

Here, in the first embodiment, when the presence server transmits the presence information on the portable terminal 12 to the portable terminal 11 under the condition that the portable terminal 11 registers, in the presence server, its presence data without its capacity data, the presence server directly transmits, to the portable terminal 11, the presence information registered on the portable terminal 12 without using the media conversion server. In this event, the presence server does not determine whether the presence data to be transmitted includes data of a format that is not usable in the portable terminal 11. Accordingly, when the portable terminal 11 receives the presence data including data of an unusable format, the portable terminal 11 transmits the data to the media conversion server. Thereby, the portable terminal 11 uses the data after causing the data to be converted, if possible, into a usable format.

In contrast, in the second embodiment, each device is capable of obtaining the presence information and using the media conversion server 15 to convert an unusable data stored in the device. In this case, each device previously registers its presence data without its capacity data in a presence server or the like, and thereby not the presence server but either of the terminals 11 and 12 uses the media conversion server 15 to perform data conversion on presence information after receiving the presence information. Another applicable method of sending the capacity information on usable image data and audio data is one in which a device reports its capacity information in requesting presence information from the presence server.

Moreover, the description has been given by using, as an example, the case where image data or audio data is not usable. However, the display and reproduction system according to the embodiments can be enhanced so as to support another kind of data that is unusable as it is but is convertible to a usable format with some kind of conversion.

### Field of the Industrial Application

This invention is applicable to a system of devices networked together.

## Claims

1. An information processing system **characterized by** comprising:
a first information processing apparatus capable of using presence information; and
a second information processing apparatus capable of using presence information, and exchanging information with the first information processing apparatus
the information processing system **characterized in that**
when the information processing system determines, based on the information or presence information on the first information processing apparatus, that the information transmitted from the first information processing apparatus to the second information processing apparatus is not usable in the second information processing apparatus, the information processing system converts the information into a format usable in the second information processing apparatus on the basis of the first presence information on the first information processing apparatus and second presence information on the second information processing apparatus.

2. The information processing system according to claim 1, **characterized in that**
the presence information on a device includes information indicating, as capacity data, information on a data format usable in the device.

3. The information processing system according to any one of claims 1 and 2, **characterized by** comprising a presence server which holds the presence information.

4. The information processing system according to claims 1, **characterized in that** the presence information is directly exchanged through a network.

5. The information processing system according to any one of claims 3 and 4, **characterized in that** the presence server includes a converter having a function to perform the conversion.

6. The information processing system according to any one of claims 3 and 4, **characterized by** comprising a media conversion server having a function to perform the conversion.

7. A second information processing apparatus capable of using presence information, and exchanging information with a first information processing apparatus capable of using presence information
the second information processing apparatus **characterized in that**
when it is determined, based on the information or presence information on the first information processing apparatus, that the information transmitted from the first information processing apparatus to the second information processing apparatus is not usable in the second information processing apparatus, the information is converted into a format usable in the second information processing apparatus on the basis of the first presence information on the first information processing apparatus and second presence information on the second information processing apparatus.

8. An information processing method employed in a second information processing apparatus capable of using presence information, and exchanging information with a first information processing apparatus capable of using presence information, the information processing method **characterized by** comprising the steps of:
transmitting presence information on the first information processing apparatus, from the first information processing apparatus to the second information processing apparatus;
determining whether or not the information is unusable in the second information processing apparatus, on the basis of the presence information on the first information processing apparatus
converting the information into a format usable in the second information processing apparatus, on the basis of the first information on the first information processing apparatus and second presence information on the second information processing apparatus.

9. A computer-readable recording medium storing a program causing a computer to execute the steps according to claim 8.

10. A program causing a computer to execute the steps according to claim 8.

## Amended claims

### Amended claims under Art. 19.1 PCT

**1.** (Amended) An information processing system **characterized by** comprising:
a first information processing apparatus capable of using presence information indicating, as capacity data, information on a data format usable by its device; and
a second information processing apparatus capable of using presence information, and exchanging information with the first information processing apparatus
the information processing system **characterized in that**
when the information processing system determines, based on the information or presence information on the first information processing apparatus, that the information transmitted from the first information processing apparatus to the second information processing apparatus is not usable in the second information processing apparatus, the information processing system converts the information into a format usable in the second information processing apparatus, on the basis of the first presence information on the first information processing apparatus and second presence information on the second information processing apparatus.

**2.** (Amended) The information processing system according to claim 1, **characterized in that**
in a case where presence data that the second information processing apparatus requests from the first information processing device includes any one of image data and audio data, and where presence data on the second information apparatus being a terminal sending the request includes decode capacity data for the one of image data and audio data, the first information processing apparatus converts the one of image data and audio data in the requested data into a format decodable by the second information processing apparatus being the terminal sending the request.

**3.** The information processing system according to any one of claims 1 and 2, **characterized by** comprising a presence server which holds the presence information.

**4.** The information processing system according to claims 1, **characterized in that** the presence information is directly exchanged through a network.

**5.** The information processing system according to any one of claims 3 and 4, **characterized in that** the presence server includes a converter having a function to perform the conversion.

**6.** The information processing system according to any one of claims 3 and 4, **characterized by** comprising a media conversion server having a function to perform the conversion.

**7.** (Amended) A second information processing apparatus capable of using presence information indicating, as capacity data, information on a data format usable by its device, and exchanging information with a first information processing apparatus capable of using presence information
the second information processing apparatus **characterized in that**
when it is determined, based on the information or presence information on the first information processing apparatus, that the information transmitted from the first information processing apparatus to the second information processing apparatus is not usable in the second information processing apparatus, the information is converted into a format usable in the second information processing apparatus on the basis of the first presence information on the first information processing apparatus and second presence information on the second information processing apparatus.

**8.** (Amended) An information processing method employed in a second information processing apparatus capable of using presence information indicating, as capacity data, information on a data format usable by its device, and exchanging information with a first information processing apparatus capable of using presence information, the information processing method **characterized by** comprising the steps of:
transmitting presence information on the first information processing apparatus from the first information processing apparatus to the second information processing apparatus;
determining whether or not the information is unusable in the second information processing apparatus, on the basis of the presence information on the first information processing apparatus
converting the information into a format usable in the second information processing apparatus, on the basis of the first presence information on the first information processing apparatus and second presence information on the second information processing apparatus.

**9.** A computer-readable recording medium storing a program causing a computer to execute the steps according to claim 7.

**10.** A program to cause a computer to execute the steps according to claim 8.
